# EUROPÄISCHE PATENTSCHRIFT

(11) **EP 2 954 545 B1**
(45) Veröffentlichungstag und Bekanntmachung des Hinweises auf die Patenterteilung: **17.08.2016**
(21) Anmeldenummer: 14702290.9
(22) Anmeldetag: 04.02.2014
(51) Int. Cl.: H01F 38/14, H01F 27/36, B60L 11/18

(54) **SPULENEINHEIT UND VORRICHTUNG ZUR INDUKTIVEN ÜBERTRAGUNG ELEKTRISCHER ENERGIE**
COIL UNIT AND DEVICE FOR THE INDUCTIVE TRANSFER OF ELECTRICAL ENERGY
UNITÉ BOBINE ET DISPOSITIF DE TRANSFERT INDUCTIF D'ENERGIE ELECTRIQUE

(30) Priorität: 05.02.2013 DE 102013101152
(43) Veröffentlichungstag der Anmeldung: 16.12.2015
(73) Patentinhaber: Conductix-Wampfler GmbH, 79576 Weil am Rhein (DE)
(72) Erfinder: GREEN, Andrew, 79429 Malsburg-Marzell (DE); PFÄTTISCH, Veit, 85049 Ingolstadt (DE)
(74) Vertreter: Charrier Rapp & Liebau
(86) Internationale Anmeldenummer: PCT/EP2014/052141
(87) Internationale Veröffentlichungsnummer: WO 2014/122125

(56) Entgegenhaltungen:
- DE-A1-102006 048 829
- US-A1- 2008 129 246
- US-A1- 2012 025 602
- US-A1- 2012 025 603
- GRANT A COVIC ET AL: "A bipolar primary pad topology for EV stationary charging and highway power by inductive coupling", ENERGY CONVERSION CONGRESS AND EXPOSITION (ECCE), 2011 IEEE, IEEE, 17. September 2011 (2011-09-17), Seiten 1832-1838, XP032067402, DOI: 10.1109/ECCE.2011.6064008 ISBN: 978-1-4577-0542-7

## Beschreibung

Die Erfindung betrifft eine Spuleneinheit nach dem Oberbegriff des Anspruchs 1, eine Vorrichtung zur induktiven Übertragung elektrischer Energie nach dem Oberbegriff des Anspruchs 12 sowie die Verwendung der Spuleneinheit nach dem Oberbegriff des Anspruchs 14.

Im Bereich der induktiven Energieübertragung zu beweglichen Verbrauchern, insbesondere Elektrolandfahrzeugen, wie Automobilen, Bussen oder Lastwagen, aber auch Zügen, ist es bekannt, die in den Elektrofahrzeugen installierte Batterie über eine am Fahrzeugboden angeordnete Sekundärspule von einer ortsfest installierten Primärspule zu laden.

Ein solches Batterieladesystem zur Verwendung beim Aufladen einer Batterie eines Elektrofahrzeugs offenbart die DE 693 13 151 T2. Dort muss der Benutzer jedoch manuell einen Primärspulenaufbau mit einem Sekundärspulenaufbau am Fahrzeug in Verbindung bringen. Dies weist den Nachteil auf, dass der Benutzer aussteigen und den Primärspulenaufbau mit dem Sekundärspulenaufbau aufwendig und kompliziert in Verbindung bringen muss.

Die DE 103 12 284 B4 offenbart einen Übertragerkopf mit einem Ferritkern, auf dem Kunststoffformteile liegen, in deren Vertiefungen Litzen eingebettet sind. Die Kunststoffformteile erleichtern dabei das Einlegen der Litzen. Der Ferritkern ist dort E-förmig ausgeführt, wobei Wicklungen um den mittleren Schenkel des E herum geführt sind. Hierdurch wird der Wirkungsgrad bei der Energieübertragung verbessert, da die E-förmige Ausführung die Feldlinien derart führt, dass weniger Streufelder entstehen und der Mehrteil der von den Primärleitungen generierten Feldlinien durch den Ferritkern mit den Schenkeln des E geführt wird.

Die WO 2010 105759 A1 und die DE 10 2009 013 694 A1 offenbaren ein Energieübertragungssystem zur induktiven Übertragung von Energie zu einem Fahrzeug, wobei dort die Primärspulen und sekundärseitigen Spulen mit Ferritmaterial hinterlegt sind oder einen Ferritkern aufweisen.

Die Veröffentlichung "A bipolar primary pad topology or EV stationary charging and highway power by inductive coupling" von Grant A. Covic et. al., Energy Conversion Congress and Exposition (ECCE), 2011, IEEE, IEEE, 17. September 2011, S. 1832,-1838, wie auch die DE 10 2006 048 829 A1, US 2008/0129246 A1, US 2012/0025603 A1 und US 2012/0025602 A1 offenbaren eine Spuleneinheit zur induktiven Übertragung elektrischer Energie mit einer Spule und einer Flussführungseinheit zur Führung eines im Betrieb der Spule auftretenden magnetischen Flusses, wobei die Flussführungseinheit zumindest teilweise um einen Überstand seitlich über die Außenabmessungen der Spule hinausreicht.

Gerade im Bereich von teils oder vollständig elektrische angetriebenen Bussen und Straßenfahrzeugen besteht jedoch der Wunsch, die Fahrzeugbatterie einfach und schnell automatisch ohne aufwendige Bedienung zu laden. Hierzu ist die Primärspule in der Regel auf oder versenkt in der Fahrbahn angeordnet, und das Fahrzeug wird so über die Primärspule gefahren, dass Sekundärspule möglichst exakt über der Primärspule positioniert ist. Anschließend muss lediglich der Ladevorgang aktiviert werden, so dass die im Boden angeordnete Primärspule elektrische Energie auf die in ihrer Nähe befindliche Sekundärspule am Fahrzeugboden übertragen kann. Insbesondere bei Bussen ist gewünscht, dass diese während des kurzen Aufenthalts an einer Bushaltestelle während des Aus- und Einsteigens der Passagiere schnell und automatisch geladen werden, ohne dass der Busfahrer aussteigen muss und umständlich die Primär- und Sekundärspule zueinander ausrichten muss.

Bei PKWs kann dies vorteilhaft während der Abstellzeit in einer Garage oder auf einem Parkplatz geschehen. Auch dort ist gewünscht, dass die Ladung möglichst weitgehend automatisch erfolgen soll, um auch den oft technisch wenig versierten Fahrzeugnutzern ein einfaches und ungefährliches Laden zu ermöglichen.

Da aber gerade Straßenfahrzeuge zwangsweise eine ausreichende Bodenfreiheit benötigen, ist der Abstand zwischen Primärspule und Sekundärspule in der Regel relativ groß, beispielsweise zwischen 15 und 20 cm. Wegen dieses großen Abstands, der für die induktive Übertragungsvorrichtung einen großen Luftspalt und somit magnetischen Widerstand darstellt, müssen zur induktiven Übertragung der elektrischen Energie von der Primärspule zur Sekundärspule relative hohe magnetische Feldstärken eingestellt werden.

Bekannt Anordnung sehen oft vor, dass die Primär- und Sekundärspulen über zusätzliche Hebe- oder Absenkmechanismen möglichst nahe zueinander gebracht werden können, um möglichst niedrige Feldstärken verwenden zu können. Dies ist jedoch mit hohem technischem und konstruktivem Aufwand verbunden, zumal dadurch das Fahrzeuggewicht weiter erhöht wird. Bevorzugt soll insbesondere die Sekundärspule unbeweglich am Fahrzeug angeordnet werden, so dass der hohe Abstand der Spulen in Kauf genommen wird.

Versuche haben ergeben, dass wegen des hohen Abstands zwischen Primärspule und Sekundärspule und der hierdurch bedingten notwendigen hohen magnetischen Feldstärken ein relativ starkes Streufeld erzeugt wird. Dieses verschlechtert einerseits den Wirkungsgrad der Energieübertragung und erzeugt andererseits sehr hohe Feldstärken auch räumlich weit außerhalb der Primär- und Sekundärspulen. Wegen der elektromagnetischen Verträglichkeit und um Gefährdungen von Personen im Bereich der Primärspuleneinheiten zu vermeiden, wird in der Regel gewünscht, dass die magnetische Flussdichte in einem Bereich neben dem Fahrzeug 6,25 µTesla nicht übersteigt. Diese Anforderung kann jedoch mit den herkömmlichen Primärspuleneinheiten und Sekundärspulen an Fahrzeugen nicht eingehalten werden.

Aufgabe der Erfindung ist es deshalb, die oben genannten Nachteile zu überwinden und eine eingangs genannte Spuleneinheit, eine eingangs genannte Vorrichtung zur induktiven Übertragung elektrischer Energie sowie die Verwendung einer solchen Spuleneinheit bereitzustellen, welche ein niedriges und räumlich kleines Streufeld aufweisen und insbesondere die gewünschten Vorgaben für die maximal außerhalb des Fahrzeugs gewünschten Grenzwerte für die Flussdichte einzuhalten. Zudem soll der Wirkungsgrad der induktiven Energieübertragung auf das Fahrzeug verbessert werden.

Diese Aufgabe löst die Erfindung mit einer Spuleneinheit mit den Merkmalen des Anspruchs 1, eine Vorrichtung zur induktiven Übertragung elektrischer Energie mit den Merkmalen des Anspruchs 12 sowie eine Verwendung der Spuleneinheit mit den Merkmalen des Anspruchs 14. Vorteilhafte Ausgestaltungen und zweckmäßige Weiterbildung der Erfindung sind in den Unteransprüchen angegeben.

Erfindungsgemäß ist die eingangs genannte Spuleneinheit dadurch gekennzeichnet, dass die Flussführungseinheit zumindest teilweise um einen Überstand seitlich über die Außenabmessungen der Spule hinausreicht. Dadurch kann der Streufluss außerhalb der Spule deutlich reduziert und vorgegebene Grenzwerte für die magnetische Flussdichte eingehalten werden. Dabei sind diejenigen überstehenden Teile der Flussführungseinheit, die in Draufsicht auf die Spule und die Flussführungseinheit gesehen quer zur Richtung des magnetischen Hauptflusses seitlich außerhalb der Spule liegen, von denjenigen Teilen der Flussführungseinheit, die in Draufsicht auf die Spule und die Flussführungseinheit unter der Spule verlaufen oder in Richtung des magnetischen Hauptflusses über die Spule überstehen, beabstandet. Diese Teile der Flussführungseinheit sind somit magnetisch voneinander getrennt, beispielsweise durch einen Luftspalt oder ein magnetisch schlecht oder gar nicht leitendes Material.

Hierdurch kann der Hauptfluss für die Energieübertragung auf die unter der Spule verlaufenden Teilen der Flussführungseinheit konzentriert werden, während die seitlich quer zur Richtung des magnetischen Hauptflusses außerhalb der Spule liegenden Teile zur Reduzierung des Streufelds verwendet werden können. Dabei können diese unterschiedlichen Teile der Flussführungseinheit im wesentlichen in der gleichen Ebene angeordnet sein, wodurch sich vor allem die seitliche Ausbreitung des Streufelds vorteilhaft reduzieren lässt.

Die seitlich quer zur Richtung des magnetischen Hauptflusses außerhalb der Spule liegenden Teile dienen somit als Streufeldabschirmung, während die unter der Spule verlaufenden Teile als Hauptflussführungseinheit dienen. Somit wird durch die erfindungsgemäße Spuleneinheit eine gute Führung des von der Spule erzeugten Hauptflusses erzielt, wodurch eine gute Leistungsübertragung gewährleistet wird. Gleichzeitig wird aber auch die geforderte Reduzierung des Streuflusses seitlich außerhalb der Spuleneinheit erreicht.

Bevorzugt kann die Spule auf der Flussführungseinheit angeordnet und in einer Wicklungsebene gewickelt sein, wobei in einer vorteilhaften Weiterbildung die Flussführungseinheit in Flächenrichtung der Wicklungsebene um den Überstand über die Außenabmessungen der Spule hinausragt. Hierdurch kann gerade für Elektrofahrzeuge oder deren Ladestationen ein günstiger flacher Aufbau erreichte werden. Die Spule kann hierzu vorteilhaft eine Flachspule mit nebeneinander oder einander teilweise überlappend angeordneten Spulenwicklungen sein. Ebenso kann die Flussführungseinheit und/oder die die Streufeldabschirmung vollständig oder zumindest teilweise flächig ausgebildet sein, um einen flachen Aufbau zu erhalten. Bevorzugt kann die Flussführungseinheit aus einem ferromagnetischen oder ferrimagnetischen Material oder einer Kombination der beiden gebildet sein, um eine gute Führung des magnetischen Flusses zu erreichen.

In einer fertigungstechnisch günstigen Ausführung kann die Flussführungseinheit aus einer Vielzahl von bevorzugt zueinander parallelen, voneinander beabstandeten Stäben gebildet sein. Dabei können in einer vorteilhaften Weiterbildung die in Draufsicht auf die Spule und die Flussführungseinheit außerhalb der Spule verlaufenden Stäbe dünner und/oder schmäler sind als die zumindest zum Teil oder auch ganz unter der Spule verlaufenden Stäbe. Bevorzugt können die Stäbe wiederum aus einer Vielzahl von aneinander gefügten oder nebeneinander angeordneten kürzeren Stäben gebildet sein, wodurch sich die Handhabung während der Fertigung der Flussführungseinheit weiter vereinfachen lässt.

Um das Streufeld weiter zur reduzieren, können vorteilhaft quer zu ihrer Längsrichtung nebeneinander angeordnete kürzere Stäbe in ihrer Längsrichtung zueinander versetzt angeordnet sein, so dass sich keine durchgängigen Luftspalte bilden. In einer fertigungstechnisch günstigen Ausführung kann die Flussführungseinheit alternativ aus einer Vielzahl von Platten gebildet sein.

Fertigungstechnisch günstig kann eine Aufnahme mit Ausnehmungen zur Fixierung der Flussführungseinheit oder deren Teile vor dem Herstellen der Spuleneinheit aufweisen, insbesondere vor dem Vergießen, Verpressen oder Verschrauben oder sonstigen Verbinden mit der Spule und der Flussführungseinheit. Bevorzugt können die Ausnehmungen gerade so tief sein, dass sie die Flussführungseinheit o der deren Teile zumindest teilweise aufnehmen, so dass die Aufnahme relativ flach bleibt. Alternativ können die Ausnehmungen so tief sein, dass sie die Streufeldabschirmung vollständig aufnehmen, so dass die Streufeldabschirmung gut gegen Einwirkungen von außen, auch während der Fertigung geschützt bleibt.

In einer günstigen Ausführung kann die Aufnahme aus einem für das Magnetfeld der Spule durchlässigen Material, insbesondere Kunststoff, bestehen, um den magnetischen Fluss nicht zu beinträchtigen. Alternativ kann die Aufnahme zumindest zum Teil, insbesondere an einem einer Grundplatte der Spuleneinheit entsprechenden Teil aus einem das Magnetfeld abschirmenden Material, insbesondere Aluminium bestehen, um das Magnetfeld vor dem Eindringen in den Boedenbereich des Fahrzeugs zu hindern.

In einer fertigungs-, transport- und montagetechnisch günstigen Ausführung können die Spule und die Flussführungseinheit fest miteinander verbunden, insbesondere miteinander vergossen, verpresst oder verschraubt oder Kombinationen davon sein.

Bevorzugt kann der Überstand mindestens ein Viertel, bevorzugt mindestens ein Drittel einer Spulenbreite von einander in Richtung des Überstands gegenüberliegenden äußeren Spulenwicklungen betragen. Dabei können in unterschiedliche Richtungen der Wicklungen unterschiedliche Überstände realisiert werden, so dass der Flussverlauf in unterschiedlichen Richtungen weitgehend unabhängig voneinander verbessert werden kann.

Bevorzugt kann die die Spule eine einphasige Spule mit einer Spulenwicklung, eine Doppel-D-Spule, wie u.a. aus der DE 10 2011 054 541 A1 bekannt, mit zwei Spulenwicklungen, eine dreiphasige Spule mit drei Spulenwicklungen oder eine um die Flussführungseinheit oder Teile davon gewickelte Solenoidspule sein. Hierdurch lässt sich bei gleichzeitiger flacher Bauform eine gute induktive Energieübertragung ermöglichen.

Erfindungsgemäß ist die eingangs genannte Vorrichtung zur induktiven Übertragung elektrischer Energie dadurch gekennzeichnet, dass die Primärspuleneinheit und/oder die Sekundärspuleneinheit wie oben und nachfolgend beschrieben ausgebildet sind. Dabei kann der Abstand zwischen der Primärspule und der Sekundärspule vorteilhaft mindestens das Zweifache, bevorzugt mindestens das Dreifache des Überstands der Flussführungseinheit über die Außenabmessungen der Spule betragen.

Weiter kann erfindungsgemäß die oben und nachfolgend beschriebene Spuleneinheit als ortsfeste Primärspuleneinheit und/oder Sekundärspuleneinheit eines beweglichen Verbrauchers, insbesondere eines Elektrofahrzeugs, bei einer Vorrichtung zur induktiven Übertragung elektrischer Energie zwischen einer Primärspule der Primärspuleneinheit und einer Sekundärspule der Sekundärspuleneinheit des beweglichen Verbrauchers verwendet werden.

Weiterhin kann bei der Vorrichtung bzw. der Verwendung die Flussführungseinheit vorteilhaft zumindest in einer Richtung quer zur Längsrichtung des Elektrofahrzeugs zumindest teilweise um den Überstand über die Außenabmessungen der Spule hinausragen.

Weitere Besonderheiten und Vorteile der Erfindung ergeben sich aus der folgenden Beschreibung bevorzugter Ausführungsbeispiele anhand der Zeichnungen. Diese zeigen:
- **Fig. 1**: eine schematische seitliche Schnittdarstellung einer erfindungsgemäßen Vorrichtung;
- **Fig. 2**: eine schematische Draufsicht auf eine Spuleneinheit;
- **Fig. 3**: eine schematische Draufsicht auf eine Ausführung einer erfindungsgemäßen Spuleneinheit;
- **Fig. 4**: eine schematische Draufsicht auf eine erste Aufnahme für die Spuleneinheit aus Fig. 3;
- **Fig. 5**: einen Querschnitt durch die Spuleneinheit aus Fig. 3 längs der Linie B-B;
- **Fig. 6**: einen Querschnitt durch eine abgewandelte Spuleneinheit aus Fig. 3 längs der Linie B-B;
- **Fig. 7**: eine schematische Draufsicht auf eine alternative Ausführung einer erfindungsgemäßen Spuleneinheit;
- **Fig. 8**: eine schematische Draufsicht auf eine zweite Aufnahme für die Spuleneinheit aus Fig. 7;
- **Fig. 9**: eine schematische Draufsicht auf eine alternative Ausführung einer erfindungsgemäßen Spuleneinheit;
- **Fig. 10**: eine schematische Draufsicht auf eine dritte Aufnahme für die Spuleneinheit aus Fig. 9;
- **Fig. 11**: eine schematische Draufsicht auf die Spuleneinheit aus Fig. 3 mit einer alternativen einphasigen Spule;
- **Fig. 12**: eine schematische Draufsicht auf eine alternative Ausführung einer erfindungsgemäßen Spuleneinheit;
- **Fig. 13**: eine schematische Draufsicht auf eine alternative Ausführung einer erfindungsgemäßen Spuleneinheit;

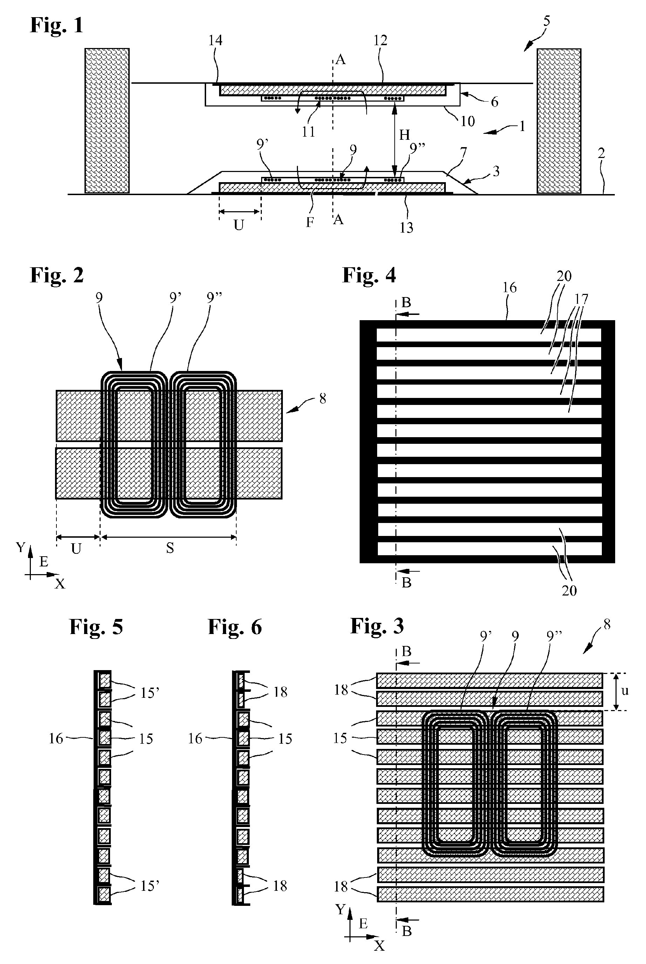

Fig. 1 zeigt eine schematische Schnittdarstellung durch eine erfindungsgemäße Vorrichtung 1 zur induktiven Übertragung elektrischer Energie zwischen einer an auf einer Fahrbahn 2 angeordneten erfindungsgemäßen Primärspuleneinheit 3 und einer an einem Fahrzeugboden 4 eines Elektrofahrzeugs 5 angeordneten erfindungsgemäßen Sekundärspuleneinheit 6.

Wie aus Fig. 1 hervorgeht, ist die Primärspuleneinheit 3 oberhalb der Fahrbahn 2 angebracht. Genauso kann die Primärspuleneinheit 3 jedoch auch in oder unter der Fahrbahn 2 versenkt sein. Auch kann die Sekundärspuleneinheit 6 in den Fahrzeugboden 4 integriert sein. Wie gut zu erkennen, ist ein Höhenabstand zwischen Primärspuleneinheit 3 und Sekundärspuleneinheit 6 relativ groß und beträgt üblicherweise zwischen 10 bis 20 cm.

Die Primärspuleneinheit 3 weist eine Gehäuse 7 mit einer Flussführungseinheit 8 und einer darauf angeordneten Primärspule 9 auf. Das Gehäuse 7 besteht aus einem magnetisch durchlässigen Material wie Kunststoff. Die aus einem ferro- oder ferrimagnetischen Material bestehende Flussführungseinheit 8 und die Primärspule 9 sind in das Gehäuse 7 in einem magnetisch durchlässigen Material, insbesondere Kunststoff, vergossen. Stattdessen können sie auch miteinander verschraubt oder mit Kunststofflagen oder -platten verpresst sein. Der Aufbau der Primärspule 9 und die Materialien für die Flussführungseinheit 8 sind dem Fachmann grundsätzlich bekannt.

Auch die in Fig. 1 gezeigten Sekundärspuleneinheit 6 weist wiederum ein Gehäuse 10 mit darin integrierter Sekundärspule 11 und aus einem ferro- oder ferrimagnetischen Material bestehende Flussführungseinheit 12 auf. Der Aufbau der Sekundärspule 11 und die und die Materialien für die Flussführungseinheit 12 sind dem Fachmann an sich bekannt.

Bevorzugt können die Flussführungseinheiten 8 und/oder 12 auf ihrer der jeweiligen Spule 9 bzw. 11 abgewandten Seite mit einer den magnetischen Fluss abschirmenden Grundplatten 13, 14 versehen sein, z.B. aus Aluminium.

Die Gehäuse 7 und 10 dienen dazu, den Kontakt mit den strom- und spannungsführenden Bauteilen Spuleneinheiten 3, 6 zu verhindern und diese vor mechanischen Beschädigungen zu schützen. In Fig. 2 bis 10 sind zur besseren Darstellung die Gehäuse 7, 10 und die Grundplatten 13, 14 nicht gezeichnet.

Die Spulen 9, 11 sind bei der vorliegenden Ausführung identisch ausgebildet, so dass die Erfindung nachfolgend vor allem anhand der Primärspule 9 beschrieben wird. Entsprechende Angaben gelten analog für die Sekundärspule 11.

Die Primärspule 9 ist als flache, sogenannte Doppel-D-Spule mit nebeneinander spiralförmig in einer Wicklungsebene E gelegten Wicklungen 9', 9" ausgebildet, wobei diese hier rechteckförmig mit abgerundeten Ecken gelegt sind, aber auch kreisspiralförmig gelegt sein können. Windungsachsen A, A' der Spulenwicklungen 9', 9" stehen senkrecht auf der Wicklungsebene E, also senkrecht auf der Papierebene in Fig. 2, 3, 7 und 9. In diesen Figuren ist die bereits in Fig. 1 eingezeichnete Querrichtung X quer zur Längsrichtung Y des Fahrzeugs 5 sowie die Längsrichtung Y eingezeichnet. Gegebenenfalls kann der Einbau aber auch in anderen Richtungen erfolgen, u.a. um 90° in der Wicklungsebene gedreht. In den Zeichnungen sind die Wicklungen 9', 9" lediglich in Form von konzentrischen gezeichneten Wicklungen gezeigt, die tatsächlich in an sich bekannter Weise jedoch spiralig ineinander gewickelt sind.

Dabei sind die Wicklungen 9', 9" so miteinander fest verschaltet oder werden im Betrieb so verschaltet oder bestromt, dass sich der in Fig. 1 angedeutete Feldlinienverlauf F des für die induktive Energieübertragung maßgeblichen magnetischen Hauptfluss' ergibt, wobei sich die Flüsse der Wicklungen 9', 9" in an sich bekannter Weise addieren und nicht auslöschen. Die Flussführungseinheit 8 dient somit dazu, den magnetischen Hauptfluss der beiden Wicklungen 9', 9" durch die wicklungsfreien Bereiche der Wicklungen 9, 9" zu kanalisieren. Die Wicklungen 9', 9" stehen deshalb bevorzugt in bekannter Weise über die Flussführungseinheit 8 seitlich hinaus.

Anstelle der in den Figuren gezeigten Spulen 9 und 11 können auch andere Arten von Spulen verwendet werden, beispielsweise zwei-, drei- oder auch mehrphasige Spulen mit einer entsprechenden Anzahl von nebeneinander oder teilweise überlappenden Spulenwicklungen.

Im weiteren wird die Erfindung anhand der Primärspuleneinheit 3 erläutert, entsprechende Ausführungen ergeben sich analog für die Sekundärspuleneinheit 6.

Bei bekannten Spulen verläuft die Flussführungseinheit üblicherweise lediglich unmittelbar unter der Spule selbst, um möglichst Gewicht und Material der Flussführungseinheit zu sparen. Bei einer Doppel-D-Spule, wie in Fig. 2 gezeigt, stehen die Wicklungen 9', 9" sogar üblicherweise auf allen Seiten über die dann deutlich kleinere Flussführungseinheit seitlich hinaus, wodurch noch mehr Gewicht und Platz gespart werden kann.

Die Spuleneinheit 3 nach Fig. 2 sieht entgegen der üblichen Minimierung der Flussführungseinheit unter der Spule vor, dass die unter der Primärspule 9 befindliche Flussführungseinheit 8 in Querrichtung X des Fahrzeugs 5 deutlich über die Breite der Primärspule 9 hinaus verlängert ist.

Denn überraschenderweise haben Messungen gezeigt, dass die um einen Überstand U deutlich über den von der Primärspule 9 bedeckten Bereich hinausragenden Teile der Flussführungseinheit 8 das Streufeld und den Streufluss in der Längsrichtung, im vorliegenden Fall also der Querrichtung X, der Flussführungseinheit 8 deutlich reduzieren. Die magnetische Flussdichte kann durch diese Maßnahme so stark reduziert werden, dass sie die außerhalb der Längsseiten des Fahrzeugs 5 gewünschten maximalen Flussdichten bereits unter dem Fahrzeug 5 deutlich unterschreitet.

Bevorzugt kann dabei der Überstand U in Richtung des Überstands U, hier also der Querrichtung X bzw. Längsrichtung der Flussführungseinheit 8 ausgehend von den äußeren Spulenwicklungen 9', 9" mindestens ein Viertel, bevorzugt mindestens ein Drittel der Spulenbreite S einander gegenüberliegender äußerer Wicklungen der Spulenwicklungen 9', 9" betragen. Dies bedeutet mit Bezug auf Fig. 2, dass der Überstand U in Querrichtung X bzw. Längsrichtung der Flussführungseinheit 8 mindestens ein Drittel der Spulenbreite B beträgt.

Fig. 3 zeigt eine Ausführung einer erfindungsgemäßen Spuleneinheit, bei der wieder die gleiche Primärspule 9 wie in Fig. 2 verwendet wird. Unterschiedlich ausgebildet ist die Flussführungseinheit 8, welche aus einer Vielzahl von einheitlich mit dem Bezugszeichen 15 bezeichneten schmalen Stäben 15 aus einem ferro- oder ferrimagnetischen Material besteht. Die Stäbe 15 verlaufen dabei in Querrichtung X quer zur Fahrzeuglängsrichtung Y und reichen wiederum um einen den Überstand U deutlich über die äußeren Spulenabmaße hinaus. Dabei verringern die über die Primärspule 9 seitlich in Querrichtung X hinausragenden Enden der Stäbe 15 das Streufeld deutlich.

Zudem sind dort in Längsrichtung Y des Fahrzeugs respektive quer zur Längsrichtung der Stäbe 15 und parallel zu den Stäben 15 weitere entsprechende Stäbe 15' angeordnet. Diese sind um den Überstand u über die in Fig. 3 kürzeren, waagrechten Teile der Spulenwicklungen 9', 9' hinaus angeordnet und verringern den Streufluss in Längsrichtung Y deutlich. Auch hier kann der Überstand u bevorzugt ein Viertel, besonders bevorzugt ein Drittel des Abstands der äußeren, in Fig. 3 waagrechten Spulenwicklungen 9', 9" betragen.

Bevorzugt kann eine in Fig. 4 gezeigte erste Aufnahme 16 eine in Anzahl und Größe der Stäbe 15 entsprechende Vielzahl von einheitlich mit dem Bezugszeichen 17 bezeichneten streifenförmigen Ausnehmungen 17 auf, in die die Stäbe 15 eingelegt werden können. Die Aufnahme 16 kann vorteilhaft aus einem für das Magnetfeld durchlässigen Material, insbesondere Kunststoff, gefertigt sein.

Fig. 5 zeigt einen Querschnitt durch die Aufnahme 16 nach Fig. 4 mit darin eingelegten Stäben 15 der Flussführungseinheit 8 nach Fig. 3, jeweils längs der Linie B-B. Hierdurch können die Stäbe 15 bei der Fertigung der Spuleneinheit 3 einfach in ihrer möglichst exakt zueinander beabstandeten Position gehalten werden, bevor sie mit der Primärspule 9 zu einer Einheit in Kunststoff vergossen werden. Die möglichst exakte Positionierung der vergossenen Teile zueinander ermöglicht im Betrieb einen möglichst gleichmäßigen magnetischen Feldverlauf.

In Fig. 6 ist eine entsprechend Fig. 3 ausgebildete alternative Flussführungseinheit 8 im Querschnitt entlang der Linie B-B aus Fig. 3 gezeigt. Unterschied zu der Ansicht in Fig. 5 ist, dass die in Fahrzeuglängsrichtung Y vor bzw. hinter der Primärspule 9 liegenden, einheitlich mit dem Bezugszeichen 18 bezeichneten Stäbe 18 nur halb so dick sind wie die unter der Primärspule 9 verlaufenden Stäbe 15. Hierdurch wird im Bereich der dünneren Stäbe 18 noch eine gute Reduzierung der Streuflusses erzielt, gleichzeitig kann aber auch das Gewicht der Flussführungseinheit 8 verringert werden. Dies ist vor allem bei der in Fig. 1 gezeigten Sekundärspuleneinheit 6 sinnvoll, um das Fahrzeug 5 nicht mit unnötigem Gewicht zu belasten.

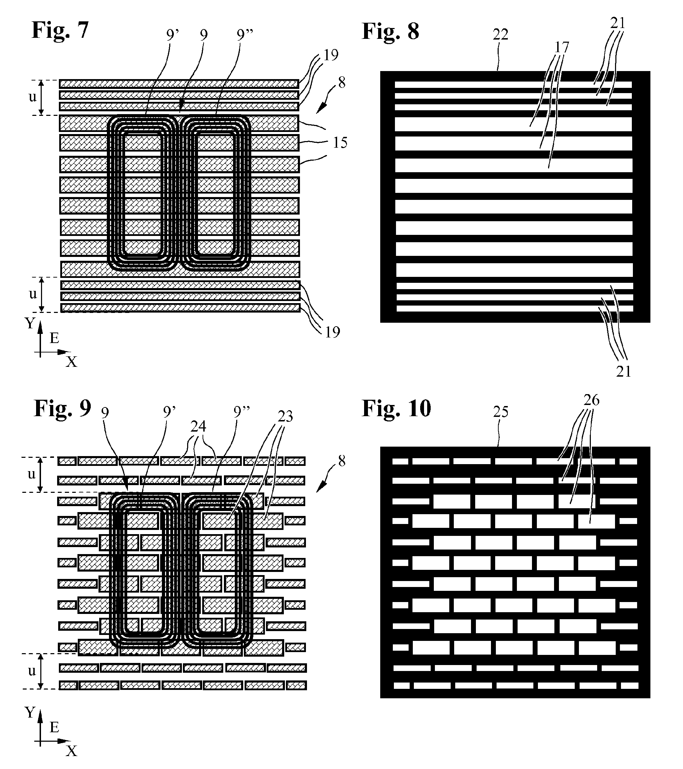

Fig. 7 zeigt eine weitere alternative Ausführung der in Fig. 3 gezeigten Flussführungseinheit 8, wobei dort zur Einsparung von Gewicht die in Fahrzeuglängsrichtung Y vor und hinter der Primärspule 9 liegenden, einheitlich mit dem Bezugszeichen 19 bezeichneten Stäbe 19 schmaler sind als die unter der Primärspule 9 liegenden Stäbe 15. Eine Draufsicht auf eine zweite Aufnahme 20 für die Stäbe 15 und 19 aus Fig. 7 zeigt Fig. 8. Die zweite Aufnahme 20 besteht wie die erste Aufnahme 16 aus Fig. 4 aus einem magnetisch durchlässigen Material, insbesondere Kunststoff, und hält die Stäbe 15 und 19 vor dem Vergießen mit der Primärspule 9 in angepassten, einheitlich mit den Bezugszeichen 21 bzw. 22 bezeichneten Ausnehmungen 21, 22 möglichst exakt in Position und in den vorgegebenen, vorteilhaft gleichmäßigen Abständen.

Die in Fig. 6 und 7 gezeigten Varianten von dünneren Stäben 18 und schmaleren Stäben 19 können auch miteinander kombiniert werden, um das Gewicht noch weiter reduzieren zu können.

Auch können die in Fig. 3 und 5 bis 7 gezeigten Stäbe 15, 15', 18 und 19 anstelle aus durchgehenden, üblicherweise leicht zerbrechlichen Ferriten auch durch einzelne, fest aneinander gefügten oder gepressten kürzeren Ferritstäben gebildet werden, wie bei der Ausführung nach Fig. 9 gezeigt. Dort werden eine Vielzahl von einheitlich mit dem Bezugszeichen 23 bzw. 24 bezeichnete kürzere breite Stäbe 23 und kürzere schmale Stäbe 24 zur Flussführungseinheit 8 kombiniert. Dies ist aus fertigungstechnischen Gründen vorteilhaft, denn die kürzeren Stäbe 23, 24 brechen weniger leicht als die längeren Stäbe 15, 18 und 19. Auch lassen sich die kürzeren Stäbe 23, 24 leichter handhaben. Wie in Fig. 9 erkennbar, sind insbesondere in Querrichtung X in Bereichen rechts und links der Primärspule 9 die einzelnen Stäbe 23, 24 zueinander versetzt angeordnet. Hierdurch kann eine verbesserte Führung des Streuflusses rechts und links der Primärspule 9 erreicht werden, da kein durchgehender Luftspalt in Längsrichtung Y existiert.

Bevorzugt können bei der in Fig. 9 gezeigten Primärspule 9 die unter den in Längsrichtung Y verlaufenden Spulenwicklungen 9', 9" im Inneren der Primärspule 9 die Stäbe 23, 24 dort nicht unterbrochen oder sehr eng aneinander gefügt bzw. gespannt werden, um in diesen Bereichen mit höchster Flussdichte keine die Flussführung hemmenden Luftspalte zu erzeugen.

Fig. 10 zeigt wieder eine dritte Aufnahme 25 zu Halten der Stäbe 23, 24 aus Fig. 9. Dabei werden die Stäbe 23, 24 jeweils in eigene, passend ausgebildete, einheitlich mit dem Bezugszeichen 26 bezeichnete Taschen 26 eingelegt. Hierdurch erleichtert sich die Fertigung und die die abstandsgenaue Lage der einzelnen Stäbe 23, 24 kann einfach sichergestellt werden.

Um bei der fahrzeugseitigen Sekundärspuleneinheit 6 eine möglichst flache Bauweise zu erreichen, können die Aufnahmen 16, 22 und 25 auch aus Aluminium oder einem anderen das magnetische Feld abschirmenden Material bestehen, so dass auf die Grundplatte 14 verzichtet werden kann.

Um weiter Material zu sparen und die Bauhöhe insbesondere der Sekundärspuleneinheit 6 noch weiter zu verringern, können die Ausnehmungen 17, 20, 21 bzw. Taschen 26 auch gerade nur so tief sein, dass die Stäbe 15, 18, 19, 23 und 24 beim Vergießen, Verpressen oder Verschrauben mit der Primärspule 9 in ihrer Position gehalten werden.

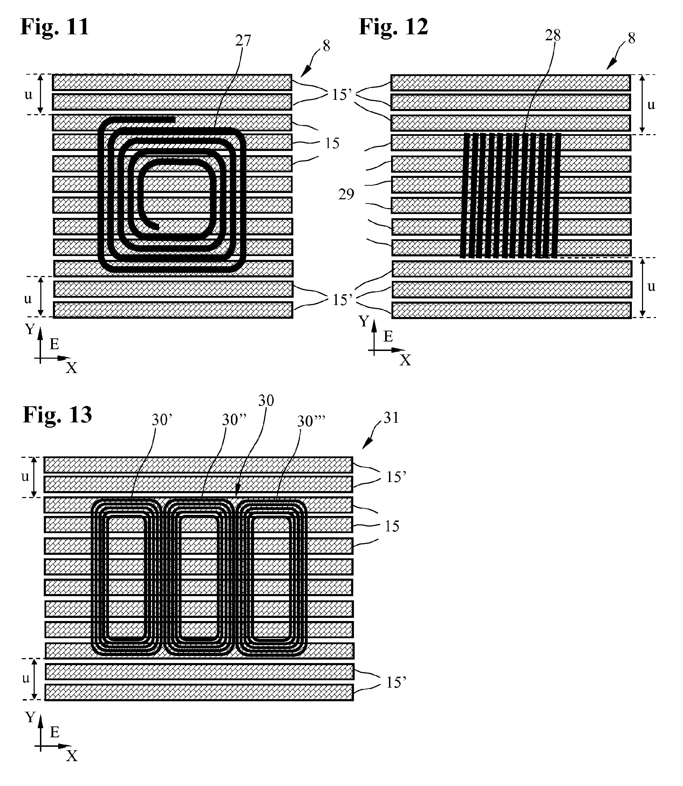

Bei der in Fig. 11 gezeigten alternativen Spuleneinheit wird anstelle der in Fig. 3 gezeigten Doppel-D-Spule 9 als einziger Unterschied eine einphasige, flach gewickelte Spule 27 verwendet.

Bei der in Fig. 12 gezeigten weiteren alternativen Spuleneinheit wird anstelle der in Fig. 3 gezeigten Doppel-D-Spule 9 eine einphasige Solenoidspule 28 verwendet, welche in an sich bekannter Weise um die mittleren Stäbe 29 der Flussführungseinheit 8 gewickelt wird. In Fig. 12 sind lediglich die oberhalb der Flussführungseinheit 8 verlaufenden Wicklungen gezeigt, die unter der Flussführungseinheit 8 verlaufenden Wicklungen sind aus Gründen der übersichtlichen Darstellung nicht gezeichnet.

Bei der in Fig. 13 gezeigten weiteren alternativen Spuleneinheit wird anstelle der in Fig. 2 gezeigten Doppel-D-Spule 9 eine dreiphasige Spule 30 mit drei Spulenwicklungen 30', 30", 30'" verwendet, die auf einer entsprechend längeren Flussführungseinheit 31 liegend gewickelt sind.

Dabei sind die drei Wicklungen 30', 30", 30"' so miteinander fest verschaltet oder werden im Betrieb so verschaltet oder bestromt, dass der für die induktive Energieübertragung maßgebliche magnetische Hauptfluss durch die wicklungsfreien Bereiche der Wicklungen 30, 30", 30"' verläuft. Dabei addieren sich die Flüsse der Wicklungen 30, 30", 30'" in an sich bekannter Weise und auslöschen sich nicht aus. Die Flussführungseinheit 8' dient somit auch hier dazu, den magnetischen Hauptfluss der Wicklungen 30, 30", 30'" durch die wicklungsfreien Bereiche der Wicklungen 30, 30", 30'" zu kanalisieren.

Bei dieser Spule 30 wird die für den Überstand U in Querrichtung X maßgebliche Spulenbreite S als Abstand der in Querrichtung X gegenüberliegender äußeren Wicklungen der Spulenwicklungen 30, 30'" herangezogen. Für den weiteren Überstand in Längsrichtung Y gelten die bei Fig. 3 getroffenen Aussagen analog.

Dabei bilden die Stäbe 15', 18, 19 in Fig. 3, 5 bis 7 und 11 bis 13 diejenigen überstehenden Teile der Flussführungseinheit 8, 12 bzw. 31, die in Draufsicht auf die Spule 9, 11, 27, 28, 30 und die Flussführungseinheit 8, 12, 31 gesehen quer zur Richtung des magnetischen Hauptflusses F seitlich außerhalb der Spule 9, 11, 27, 28, 30 liegen, also in den Zeichnungen oberhalb und unterhalb der Spulen 9, 11, 27, 28, 30. Dabei könne die Stäbe 15', 18, 19 selbst wiederum vorteilhaft in Richtung des magnetischen Hauptflusses F verlaufen. Die obigen Stäbe 15', 18, 19 in Fig. 3, 5 bis 7 und 11 bis 13 sind deutlich von den in Draufsicht unter den Spulen 9, 11, 27, 28, bzw. 30 verlaufenden Stäben 15 bzw. 29 beabstandet und somit magnetisch hiervon getrennt. Entsprechendes gilt ebenso für diejenigen schmaleren kurzen Stäbe 24 aus Fig. 9, welche in Fig. 9 oberhalb und unterhalb der Spule 9 verlaufen.

Die Stäbe 15', 18, 19 bzw. 24 bilden somit eine Streufeldabschirmung, wohingegen die unter den Spulen 9, 11, 27, 28, bzw. 30 verlaufenden Stäbe 15, 23 bzw. 29 als Hauptflussführungseinheit dienen.

In einer vorteilhaften Weiterbildung der Erfindung kann um die in den Figuren gezeigte Flussführungseinheit 8 mit Spule 9 auch noch eine weitere Streufeldabschirmung in Form eines geschlossenen Rahmens oder Rings, der an die Form der Spule 9 angepasst ist, aus ferro- oder ferrimagnetischen Material verwendet werden. Der Rahmen oder Ring kann einstückig oder aus einer Vielzahl von Teilstücken zusammengesetzt sein. Ebenso können in die oben beschriebenen Aufnahmen weitere, für den Rahmen oder Ring vorgesehen Ausnehmungen und Taschen in analoger Weise vorgesehen werden. Bevorzugt kann der Rahmen oder Ring in Höhe der Flussführungseinheit 8 oder der Spule 9 und bevorzugt flächenparallel zur Wicklungsebene E verlaufen.

Anstelle der in den Figuren gezeigten und oben beschriebenen Spulen können auch andere Arten von Spulen verwendet werden, beispielsweise mehrphasige Spulen mit einer entsprechenden Anzahl Spulenwicklungen. Auch können die Spulenwicklungen der Spulen nebeneinander gelegt oder teilweise überlappenden ausgebildet sein. Zudem kann die Spule, die Flussführungseinheit und/oder die Streufeldabschirmung ggf. auch nicht vollständig eben sein, sondern teilweise geknickt oder formangepasst sein, um insbesondere die Sekundärspule platzsparend an die Geometrie eines Fahrzeugbodens anpassen zu können. Beispielsweise könnte bei der Spuleneinheit 3 aus Fig. 2 entlang der in Fig. 2 senkrechten Symmetrielinie zwischen den Wicklungen 9, 9' ein Knick in Höhenrichtung vorgesehen werden.

Auch können die in den Fig. 11 bis 13 gezeigten unterschiedlichen Spulen mit den unterschiedlichen Ausführungen der Flussführungseinheit nach Fig. 2 bis 10 kombiniert werden.

### Bezugszeichenliste

- 1: Energieübertragungsvorrichtung
- 2: Fahrbahn
- 3: Primärspuleneinheit
- 4: Fahrzeugboden
- 5: Elektrofahrzeug mit angedeuteten Reifen
- 6: Sekundärspuleneinheit
- 7: Gehäuse Primärspuleneinheit
- 8: Flussführungseinheit Primärspule
- 9: Primärspule
- 9', 9": Spulenwicklungen Primärspule
- 10: Gehäuse Sekundärspuleneinheit
- 11: Sekundärspule
- 12: Flussführungseinheit Sekundärspule
- 13: Grundplatte Primärspuleneinheit
- 14: Grundplatte Sekundärspuleneinheit
- 15, 15': Ferritstäbe
- 16: erste Aufnahme
- 17: streifenförmige Ausnehmungen
- 18: dünne Ferritstäbe
- 19: schmale Ferritstäbe
- 20: Ausnehmungen für dünne Ferritstäbe
- 21: Ausnehmungen für schmale Ferritstäbe
- 22: zweite Aufnahme
- 23: breite kürzere Ferritstäbe
- 24: schmale kürzere Ferritstäbe
- 25: dritte Aufnahme
- 26: Taschen
- 27: einphasige Spule
- 28: Solenoidspule
- 29: umwickelte Stäbe
- 30: dreiphasige Spule
- 30', 30", 30"': Spulenwicklungen dreiphasige Spule
- 31: längeren Flussführungseinheit dreiphasige Spule

- A: Wicklungsachse
- E: Wicklungsebene
- F: Feldlinienverlauf
- H: Höhenabstand der Spulen
- S: Spulenbreite
- U, u: Überstand in Querrichtung bzw. Längsrichtung
- X: Querrichtung Fahrzeug
- Y: Längsrichtung Fahrzeug

## Patentansprüche

1. Spuleneinheit (3; 6) zur induktiven Übertragung elektrischer Energie mit einer Spule (9; 11; 27; 28; 30) und einer Flussführungseinheit (8; 12; 31) zur Führung eines im Betrieb der Spule (9; 11; 27; 28; 30) auftretenden magnetischen Flusses, wobei die Flussführungseinheit (8; 12; 31) zumindest teilweise um einen Überstand (U; u) seitlich über die Außenabmessungen der Spule (9; 11; 27; 28; 30) hinausreicht, **dadurch gekennzeichnet, dass** die überstehenden Teile (15'; 18; 19; 24) der Flussführungseinheit (8; 12; 31), die in Draufsicht auf die Spule (9; 11; 27; 28; 30) und die Flussführungseinheit (8; 12; 31) gesehen quer zur Richtung des magnetischen Hauptflusses (F) seitlich außerhalb der Spule (9; 11; 27; 28; 30) liegen, von den Teilen (15; 23; 29) der Flussführungseinheit (8; 12; 31), die in Draufsicht auf die Spule (9; 11; 27; 28; 30) und die Flussführungseinheit (8; 12; 31) unter der Spule (9; 11; 27; 28; 30) verlaufen oder in Richtung des magnetischen Hauptflusses (F) über die Spule (9; 11; 27; 28; 30) überstehen, getrennt sind.

2. Spuleneinheit (3; 6) nach Anspruch 1, **dadurch gekennzeichnet, dass** die Spule (9; 11; 27; 28; 30) auf der Flussführungseinheit (8; 12; 31) angeordnet ist und in einer Wicklungsebene (E) gewickelt ist.

3. Spuleneinheit (3; 6) nach Anspruch 1 oder 2, **dadurch gekennzeichnet, dass** die Flussführungseinheit (8; 12; 31) in Flächenrichtung der Wicklungsebene (E) um den Überstand (U; u) über die Außenabmessungen der Spule (9; 11; 27; 28; 30) hinausragt.

4. Spuleneinheit (3; 6) nach einem der voranstehenden Ansprüche, **dadurch gekennzeichnet, dass** die Flussführungseinheit (8; 12; 31) aus einer Vielzahl von bevorzugt zueinander parallelen, voneinander beabstandeten Stäben (15; 15'; 18; 19) gebildet ist.

5. Spuleneinheit (3; 6) nach Anspruch 4, **dadurch gekennzeichnet, dass** die in Draufsicht auf die Spule (9; 11; 27; 28; 30) und die Flussführungseinheit (8; 12; 31) außerhalb der Spule (9; 11; 27; 28; 30) verlaufenden Stäbe (18; 19) dünner und/oder schmäler sind als die zumindest zum Teil unter der Spule (9; 11; 27; 28; 30) verlaufenden Stäbe (15).

6. Spuleneinheit (3; 6) nach Anspruch 4 oder 5, **dadurch gekennzeichnet, dass** die Stäbe (15, 15', 18, 19) wiederum aus einer Vielzahl von aneinander gefügten oder nebeneinander angeordneten kürzeren Stäben (23, 24) gebildet sind.

7. Spuleneinheit (3; 6) nach Anspruch 6, **dadurch gekennzeichnet, dass** quer zu ihrer Längsrichtung nebeneinander angeordnete kürzere Stäbe (23, 24) in ihrer Längsrichtung zueinander versetzt angeordnet sind.

8. Spuleneinheit (3; 6) nach einem der Ansprüche 4 bis 7, **dadurch gekennzeichnet, dass** sie eine Aufnahme (16, 22, 25) mit Ausnehmungen (17; 20, 21; 26) zur Fixierung der Flussführungseinheit (8; 12; 31) oder deren Teile vor dem Vergießen, Verpressen oder Verschrauben mit der Spule (9; 11; 27; 28; 30) aufweist.

9. Spuleneinheit (3; 6) nach Anspruch 8, **dadurch gekennzeichnet, dass** die Ausnehmungen (17; 20, 21; 26) so tief sind, dass sie die Flussführungseinheit (8; 12; 31) zumindest teilweise oder vollständig aufnehmen.

10. Spuleneinheit (3; 6) nach Anspruch 8 oder 9, **dadurch gekennzeichnet, dass** die Aufnahme (16, 22, 25) aus einem für das Magnetfeld der Spule (9; 11; 27; 28; 30) durchlässigen Material, insbesondere Kunststoff, oder aus einem das Magnetfeld abschirmenden Material, insbesondere Aluminium besteht.

11. Spuleneinheit (3; 6) nach einem der voranstehenden Ansprüche, **dadurch gekennzeichnet, dass** der Überstand (U; u) mindestens ein Viertel, bevorzugt mindestens ein Drittel einer Spulenbreite (S) von einander in Richtung des Überstands (U; u) gegenüberliegenden äußeren Spulenwicklungen (9', 9"; 30', 30"') beträgt.

12. Vorrichtung (1) zur induktiven Übertragung elektrischer Energie zwischen einer Primärspule (9) einer ortsfesten Primärspuleneinheit (3) und einer Sekundärspule (11) einer an einem beweglichen Verbraucher, insbesondere einem Elektrofahrzeug (5) angeordneten Sekundärspuleneinheit (6), **dadurch gekennzeichnet, dass** die Primärspuleneinheit (3) und/oder die Sekundärspuleneinheit (6) nach einem der Ansprüche 1 bis 11 ausgebildet sind.

13. Vorrichtung (1) nach Anspruch 12, **dadurch gekennzeichnet, dass** der Abstand zwischen der Primärspule und der Sekundärspule mindestens das Zweifache, bevorzugt mindestens das Dreifache des Überstands (U; u) der Flussführungseinheit (8; 12; 31) über die Außenabmessungen der Spule (9; 11; 27; 28; 30) beträgt.

14. Verwendung einer Spuleneinheit (3; 6) nach einem der Ansprüche 1 bis 11 als ortsfeste Primärspuleneinheit (3) und/oder Sekundärspuleneinheit (6) eines beweglichen Verbrauchers, insbesondere eines Elektrofahrzeugs (5), bei einer Vorrichtung (1) zur induktiven Übertragung elektrischer Energie zwischen einer Primärspule (9) der Primärspuleneinheit (3) und einer Sekundärspule (11) der Sekundärspuleneinheit (6) des beweglichen Verbrauchers.

15. Vorrichtung nach einem der Ansprüche 12 bis 13 oder Verwendung nach Anspruch 14, **dadurch gekennzeichnet, dass** die Flussführungseinheit (8; 12; 31) zumindest in einer Richtung (X) quer zur Längsrichtung (Y) des Elektrofahrzeugs (5) zumindest teilweise um den Überstand (U; u) über die Außenabmessungen der Spule (9; 11; 27; 28; 30) hinausragt.

## Claims

1. Coil unit (3; 6) for inductive transmission of electrical energy with a coil (9; 11; 27; 28; 30) and a flux guide unit (8; 12; 31) for guidance of a magnetic flux which is produced when the coil (9; 11; 27; 28; 30) is in operation, wherein the flux guide unit (8; 12; 31) extends at least partly laterally out beyond the external dimensions of the coil (9; 11; 27; 28; 30) by a projecting amount (U; u), **characterised in that** the projecting parts (15'; 18; 19; 24) of the flux guide unit (8; 12; 31) which, when seen in a plan view of the coil (9; 11; 27; 28; 30) and the flux guide unit (8; 12; 31), lie laterally outside the coil (9; 11; 27; 28; 30) transversely to the direction of the main magnetic flux (F), are separated from the parts (15; 23; 29) of the flux guide unit (8; 12; 31) which in the plan view of the coil (9; 11; 27; 28; 30) and the flux guide unit (8; 12; 31) run under the coil (9; 11; 27; 28; 30) or project over the coil (9; 11; 27; 28; 30) in the direction of the main magnetic flux (F).

2. Coil unit (3; 6) according to claim 1, **characterised in that** the coil (9; 11; 27; 28; 30) is arranged on the flux guide unit (8; 12; 31) and is wound in a winding plane (E).

3. Coil unit (3; 6) according to claim 1 or 2, **characterised in that** in the areal direction of the winding plane (E) the flux guide unit (8; 12; 31) projects beyond the external dimensions of the coil (9; 11; 27; 28; 30) by the projecting amount (U; u).

4. Coil unit (3; 6) according to one of the preceding claims, **characterised in that** the flux guide unit (8; 12; 31) is formed of a multiplicity of bars (15; 15'; 18; 19) which are preferably parallel to one another and spaced a distance from one another.

5. Coil unit (3; 6) according to claim 4, **characterised in that** the bars (18; 19) running outside the coil (9; 11; 27; 28; 30) when seen in a plan view of the coil (9; 11; 27; 28; 30) and the flux guide unit (8; 12; 31) are thinner and/or narrower than the bars (15) running at least partly under the coil (9; 11; 27; 28; 30).

6. Coil unit (3; 6) according to claim 4 or 5, **characterised in that** the bars (15, 15', 18, 19) again are formed of a multiplicity of shorter bars (23, 24) which are joined to one another or arranged adjacent to one another.

7. Coil unit (3; 6) according to claim 6, **characterised in that** shorter bars (23, 24) arranged adjacent to one another transversely to their longitudinal direction are arranged offset from one another in their longitudinal direction.

8. Coil unit (3; 6) according to one of claims 4 to 7, **characterised in that** it has a mounting (16, 22, 25) with recesses (17; 20, 21; 26) for fixing the flux guide unit (8; 12; 31) or parts thereof prior to casting, pressing or screwing with the coil (9; 11; 27; 28; 30).

9. Coil unit (3; 6) according to claim 8, **characterised in that** the recesses (17; 20, 21; 26) are so deep that they accommodate the flux guide unit (8; 12; 31) at least partly or completely.

10. Coil unit (3; 6) according to claim 8 or 9, **characterised in that** the mounting (16, 22, 25) is made of a material which is permeable to the magnetic field of the coil (9; 11; 27; 28; 30), in particular of plastic, or of a material which shields against the magnetic field, in particular aluminium.

11. Coil unit (3; 6) according to one of the preceding claims, **characterised in that** the projecting amount (U; u) is at least a quarter, preferably at least a third of a coil width (S) of outer coil windings (9', 9"; 30', 30"') facing one another in the direction of the projecting amount (U; u).

12. Device (1) for inductive transmission of electrical energy between a primary coil (9) of a stationary primary coil unit (3) and a secondary coil (11) of a secondary coil unit (6) arranged on a moving consumer, in particular an electric vehicle (5), **characterised in that** the primary coil unit (3) and/or the secondary coil unit (6) are embodied according to one of claims 1 to 11.

13. Device (1) according to claim 12, **characterised in that** the distance between the primary coil and the secondary coil is at least twice, preferably at least three times the projecting amount (U; u) of the flux guide unit (8; 12; 31) beyond the external dimensions of the coil (9; 11; 27; 28; 30).

14. Use of a coil unit (3; 6) according to one of claims 1 to 11 as a stationary primary coil unit (3) and/or secondary coil unit (6) of a moving consumer, in particular an electric vehicle (5), in the case of a device (1) for inductive transmission of electrical energy between a primary coil (9) of the primary coil unit (3) and a secondary coil (11) of the secondary coil unit (6) of the moving consumer.

15. Device according to one of claims 12 to 13 or use according to claim 14, **characterised in that** at least in a direction (X) transversely to the longitudinal direction (Y) of the electric vehicle (5), the flux guide unit (8; 12; 31) projects at least partly beyond the external dimensions of the coil (9; 11; 27; 28; 30) by the projecting amount (U; u).

## Revendications

1. Unité formant bobine (3 ; 6) servant à transférer par induction une énergie électrique avec une bobine (9 ; 11 ; 27 ; 28 ; 30) et une unité de guidage de flux (8 ; 12 ; 31) servant à guider un flux magnétique sortant lors du fonctionnement de la bobine (9 ; 11 ; 27 ; 28 ; 30), dans laquelle l'unité de guidage de flux (8 ; 12 ; 31) va latéralement au-delà des dimensions extérieures de la bobine (9 ; 11 ; 27 ; 28 ; 30) au moins en partie d'une valeur d'une saillie (U ; u), **caractérisée en ce que** les parties (15' ; 18 ; 19 ; 24) faisant saillie de l'unité de guidage de flux (8 ; 12 ; 31), qui se trouvent dans une vue d'en haut sur la bobine (9 ; 11 ; 27 ; 28 ; 30) et sur l'unité de guidage de flux (8 ; 12 ; 31) vu de manière transversale par rapport à la direction du flux principal (F) magnétique de manière latérale en dehors de la bobine (9 ; 11 ; 27 ; 28 ; 30), sont séparées des parties (15 ; 23 ; 29) de l'unité de guidage de flux (8 ; 12 ; 31), qui s'étendent dans la vue d'en haut sur la bobine (9 ; 11 ; 27 ; 28 ; 30) et sur l'unité de guidage de flux (8 ; 12 ; 31) sous la bobine (9 ; 11 ; 27 ; 28 ; 30) ou qui font saillie dans la direction du flux principal (F) magnétique de la bobine (9 ; 11 ; 27 ; 28 ; 30).

2. Unité formant bobine (3 ; 6) selon la revendication 1, **caractérisée en ce que** la bobine (9 ; 11 ; 27 ; 28 ; 30) est disposée sur l'unité de guidage de flux (8 ; 12 ; 31) et est enroulée dans un plan d'enroulement (E).

3. Unité formant bobine (3 ; 6) selon la revendication 1 ou 2, **caractérisée en ce que** l'unité de guidage de flux (8 ; 12 ; 31) dépasse, dans la direction de surface du plan d'enroulement (E), des dimensions extérieures de la bobine (9 ; 11 ; 27 ; 28 ; 30) de la valeur de la saillie (U ; u).

4. Unité formant bobine (3 ; 6) selon l'une quelconque des revendications précédentes, **caractérisée en ce que** l'unité de guidage de flux (8 ; 12 ; 31) est formée à partir d'une pluralité de barres (15 ; 15' ; 18 ; 19) de manière préférée parallèles les unes par rapport aux autres, espacées les unes des autres.

5. Unité formant bobine (3 ; 6) selon la revendication 4, **caractérisée en ce que** les barres (18 ; 19) s'étendant dans la vue d'en haut sur la bobine (9 ; 11 ; 27 ; 28 ; 30) et sur l'unité de guidage de flux (8 ; 12 ; 31) en dehors de la bobine (9 ; 11 ; 27 ; 28 ; 30) sont plus fines et/ou moins larges que les barres (15) s'étendant au moins en partie sous la bobine (9 ; 11 ; 27 ; 28 ; 30).

6. Unité formant bobine (3 ; 6) selon la revendication 4 ou 5, **caractérisée en ce que** les barres (15, 15', 18, 19) sont formées à nouveau à partir d'une pluralité de barres (23, 24) plus courtes assemblées les unes contre les autres ou disposées les unes à côté des autres.

7. Unité formant bobine (3 ; 6) selon la revendication 6, **caractérisée en ce que** des barres (23, 24) plus courtes disposées les unes à côté des autres de manière transversale par rapport à leur direction longitudinale sont disposées de manière décalée les unes par rapport aux autres dans leur direction longitudinale.

8. Unité formant bobine (3 ; 6) selon l'une quelconque des revendications 4 à 7, **caractérisée en ce qu'**elle présente un logement (16, 22, 25) pourvu d'évidements (17 ; 20, 21 ; 26) servant à fixer l'unité de guidage de flux (8 ; 12 ; 31) ou ses parties avant l'assemblage par scellage, compression ou vissage à la bobine (9 ; 11 ; 27 ; 28 ; 30).

9. Unité formant bobine (3 ; 6) selon la revendication 8, **caractérisée en ce que** les évidements (17 ; 20, 21 ; 26) sont si profonds qu'ils reçoivent au moins en partie ou en totalité l'unité de guidage de flux (8 ; 12 ; 31) .

10. Unité formant bobine (3 ; 6) selon la revendication 8 ou 9, **caractérisée en ce que** le logement (16, 22, 25) est constitué d'un matériau laissant passer le champ magnétique de la bobine (9 ; 11 ; 27 ; 28 ; 30), en particulier de plastique, ou d'un matériau bloquant le champ magnétique, en particulier d'aluminium.

11. Unité formant bobine (3 ; 6) selon l'une quelconque des revendications précédentes, **caractérisée en ce que** la saillie (U ; u) représente au moins un quart, de manière préférée au moins un tiers d'une largeur de bobine (S) d'enroulements de bobine (9', 9" ; 30' , 30"') extérieurs se faisant face dans une direction de la saillie (U ; u).

12. Dispositif (1) servant à transférer par induction de l'énergie électrique entre une bobine primaire (9) d'une unité formant bobine primaire (3) stationnaire et une bobine secondaire (11) d'une unité formant bobine secondaire (6) disposée au niveau d'un consommateur mobile, en particulier un véhicule électrique (5), **caractérisé en ce que** l'unité formant bobine primaire (3) et/ou l'unité formant bobine secondaire (6) sont réalisées selon l'une quelconque des revendications 1 à 11.

13. Dispositif (1) selon la revendication 12, **caractérisé en ce que** la distance entre la bobine primaire et la bobine secondaire représente au moins le double, de manière préférée au moins le triple de la saillie (U ; u) de l'unité de guidage de flux (8 ; 12 ; 31) au-delà des dimensions extérieures de la bobine (9 ; 11 ; 27 ; 28 ; 30).

14. Utilisation d'une unité formant bobine (3 ; 6) selon l'une quelconque des revendications 1 à 11 en tant qu'unité formant bobine primaire (3) et/ou unité formant bobine secondaire (6) stationnaire d'un consommateur mobile, en particulier d'un véhicule électrique (5), pour un dispositif (1) servant à transférer par induction une énergie électrique entre une bobine primaire (9) de l'unité formant bobine primaire (3) et une bobine secondaire (11) de l'unité formant bobine secondaire (6) du consommateur mobile.

15. Dispositif selon l'une quelconque des revendications 12 à 13 ou utilisation selon la revendication 14, caractérisé ou **caractérisée en ce que** l'unité de guidage de flux (8 ; 12 ; 31) dépasse, au moins dans une direction (X) de manière transversale par rapport à la direction longitudinale (Y) du véhicule électrique (5), au moins en partie de la valeur de la saillie (U ; u) des dimensions extérieures de la bobine (9 ; 11 ; 27 ; 28 ; 30).
